Europäisches Patentamt

European Patent Office

Office européen des brevets

(11) Veröffentlichungsnummer: **0 255 505 B1**

(12) # EUROPÄISCHE PATENTSCHRIFT

(45) Veröffentlichungstag der Patentschrift: **27.11.91**

(51) Int. Cl.⁵: **H02H 3/00, H02H 7/26**

(21) Anmeldenummer: **87890098.4**

(22) Anmeldetag: **14.05.87**

(54) **Einrichtung zur Steuerung und Überwachung einer elektrischen Energieverteilungsanlage.**

(30) Priorität: **29.07.86 AT 2038/86**

(43) Veröffentlichungstag der Anmeldung:
**03.02.88 Patentblatt 88/05**

(45) Bekanntmachung des Hinweises auf die
Patenterteilung:
**27.11.91 Patentblatt 91/48**

(84) Benannte Vertragsstaaten:
**BE CH DE ES FR GB GR IT LI LU NL SE**

(56) Entgegenhaltungen:
**EP-A- 0 103 151
DE-A- 3 026 126
DE-A- 3 132 730
US-A- 4 161 651
US-A- 4 517 619**

**Optische Nachrichtentechnik, Teil 2 Komponenten, Systeme Messtechnik-1985**

(73) Patentinhaber: **Sprecher Energie Österreich
Gesellschaft m.b.H.
Franckstrasse 51
A-4020 Linz(AT)**

(72) Erfinder: **Raffeiner, Erwin
Althauserstrasse 7
A-4230 Pregarten(AT)**
Erfinder: **Wögerbauer, Johann
Steinbauerstrasse 7
A-4040 Linz(AT)**

(74) Vertreter: **Rossboth, Werner Heinz
c/o Sprecher Energie Österreich Gesellschaft m.b.H. Franckstrasse 51
A-4020 Linz(AT)**

## Beschreibung

Die Erfindung bezieht sich auf eine Einrichtung zur Steuerung und Überwachung einer elektrischen Energieverteilungsanlage, insbesondere einer Hochspannungsschaltanlage in Freiluft, mit mehreren, von einer Schaltstation aus gesteuerten und überwachten Schaltfeldern und Übertragung von in Mikroprozessoren mit Speicher-Einheiten verarbeiteten digitalen Signalen zwischen Schaltstation und den Schaltfeldern über bidirektionale Lichtwellenleiter.

Bei bekannten Einrichtungen zur Steuerung und Überwachung von Hochspannungsschaltanlagen in Freiluft werden von einer in der Schaltstation befindlichen, mikroprozessorgeführten Zentraleinheit mit Steuer- und Protokollierteil über Drahtleitungen sämtliche Steuer- und Meldefunktionen, wie Schaltbefehle, Schaltfehlerschutz, Schaltautomatik, Stellungs- und Gefahrenmeldung sowie gegebenenfalls Meßdatenanzeige, abgewickelt.

Zur Vor-Ort-Steuerung der Schaltgeräte sind in den Schaltfeldern Steuerschränke vorhanden, die über Drahtleitungen, eventuell ein zentraler Übertragungskanal (Bussteuerung), miteinander und mit der Zentraleinheit in Verbindung stehen. Abgesehen vom Verdrahtungs- und Kabelaufwand, haben Drahtübertragungen elektronischer Signale in Hochspannungsschaltanlagen den Nachteil, daß sie empfindlich gegen elektromagnetische Beeinflussung sind, außerdem eine begrenzte Bandbreite aufweisen. Gegen den Einfluß der Hochspannungsbetriebsmittel sind umfangreiche Schutzmaßnahmen für Bedienungspersonal und elektronische Geräte erforderlich.

Aus der EP-OS O IO3 I5I ist ein Verfahren zum Betrieb einer elektrischen Energieverteilungsanlage bekannt, bei dem zur Durchführung leittechnischer Funktionen sämtliche Schaltfelder durch wenigstens einen bidirektionalen Lichtleiter mit einer Schaltstation sternförmig verbunden sind und zum Zwecke des Schaltfehlerschutzes ein bestimmtes Schaltfeld durch bidirektionale Lichtleiter mit allen übrigen Schaltfeldern sternförmig verbunden ist. Unter der Bezeichnung Schaltfeld wird dabei eine Außenstation der Schaltstation, z.B. ein Steuerschrank, verstanden. Nicht nur der für den Schaltversagerschutz, die Messung und Meldung erforderliche Datenaustausch zwischen Außenstation und den Klemmkästen der elektrischen Betriebsmittel der Energieverteilungsanlage, sondern auch jener für die Schaltbefehle von der Schaltstation zu den Außenstationen erfolgt auf herkömmliche Art über Drahtleitungen mit allen ihren Nachteilen.

Die digitalen Signale werden in Mikroprozessoren verarbeitet, welche in der Schaltstation und den Außenstationen vorhanden sind. Komponenten zur Umsetzung der optischen Signale auf elektrische Signale sind nicht angeführt.

Nachteilig ist bei diesem Verfahren der relativ hohe Verkabelungsaufwand, der sich durch die Lichtleiteranwendung noch erhöht. Zur Vor-Ort-Steuerung sind außerdem Steuerschränke in den Schaltfeldern erforderlich.

Überwachungs-Einheiten mit Mikroprozessoren in verschiedenen Hirarchieebenen und Speicher-Einheiten sind aus den DE-OS 3 026 126 und DE-OS 3 132 730 bekannt.

Schutzrelaissysteme für Energieverteilungsnetze zum Ausschalten von Leistungsschaltern auf Grund gemessener Ströme sind in den US-PS 4 161 651 und US-PS 4 517 619 beschrieben. Bei diesen Schutzrelaissystemen erfolgt die Signalübertragung von den Meßwertgebern zu einer zentralen Auswerteeinheit und zurück zu Steuerkreisen zur Aktivierung der Leistungsschalter über einen Lichtwellenleiterbus. In der zentralen Auswerteeinheit werden digitale Signale oder Signale mit Wellenlängenmodulation verarbeitet. Der Lichtwellenleiterbus kann aus einem bidirektionalen Lichtwellenleiter oder einem Lichtwellenleiter für jede Signalübertragungsrichtung bestehen, an welche die Meßwertgeber und Steuerkreise je über einen Dreitor-Koppler angeschlossen sind. Vor den Stromwandlern im Energieverteilungsnetz zu den Meßwertgebern führen nachteilige Draht-Signalleitungen. In den Steuerkreisen werden die Lichtsignale in elektromagnetische Signale umgewandelt, die den jeweiligen Leistungsschalter aktiveren. Die Steuerkreise sind daher ebenfalls mit den Antrieben der Leistungsschalter über Drahtleitungen verbunden.

Durch die in der Folge aufgezeigte erfindungsgemäße Ausführung wird bezweckt, eine Einrichtung der eingangs genannten Art zu schaffen, bei welcher die vorangeführten Nachteile vermieden sind, die durch einfachen und vereinheitlichten Aufbau wirtschaftlich ist, eine hohe Ausfalls- und Betriebssicherheit aufweist und zur Vor-Ort-Steuerung der Schaltgeräte keine Steuerschränke in den Schaltfeldern erfordert. Unter Schaltfeld ist dabei die Gesamtheit des Sammelschienenabganges einer Energieverteilungsanlage mit sämtlichen elektrischen Betriebsmitteln zu verstehen.

Dies wird dadurch erreicht, daß sämtliche Schaltgeräteantriebskästen je eines Schaltfeldes durch wenigstens einen bidirektionalen Lichtwellenleiter miteinander verbunden sind, der an eine in der Schaltstation befindliche Steuer- und Überwachungs-Einheit mit Zeit-Einheit und wenigstens einem Mikroprozessor je Schaltfeld angeschlossen ist, wobei die Umsetzung der digitalen Signale durch optische Viertorkoppler mit integrierten Empfangsund Sende-Dioden in den Schaltgeräteantriebskästen erfolgt, und die elektrischen Signale zur Steuerung des jeweiligen Schaltfeldes und Rückmeldung an die Steuer- und Überwachungs-Einheit in einem vereinheitlichten, in den Schaltgeräteantriebskästen vorhandenen Mikroprozessor-System ausgewertet werden.

Sämtliche Steuer-, Melde- und Überwachungsfunktionen, wie Schaltbefehle, Schaltfehlerschutz, Schaltautomatik, Stellungs- und Gefahrenmeldung sowie gegebenenfalls Meßdaten, können dadurch über einen Lichtwellenleiter vom Schaltfeld zur Schaltstation und umgekehrt übertragen werden, wobei keine Steuerschränke oder Außenstationen erforderlich sind. Der Verkabelungsaufwand ist damit wirtschaftlich, auch wenn man für die Meßdatenübertragung eine zusätzliche Lichtwellenleiterverbindung pro Schaltfeld vorsieht. Durch die Lichtwellenleiteranwendung ergeben sich die bekannten Vorteile der Unempfindlichkeit gegen elektromagnetische Einflüsse, bezüglich Gewicht und isolierenden Eigenschaften. Optische Viertorkoppler mit integrierten Empfangs- und Sende-Dioden haben eine Lebensdauer, die mit jener von C-MOS-Halbleitern vergleichbar ist, wobei sich auch keine thermischen Probleme stellen. Sie ermöglichen außerdem ein verlustarmes Auskoppeln der digitalen optischen Signale aus dem Lichtwellenleiter, so daß dieser von Antriebskasten zu Antriebskasten, von erforderlichen Steckanschlüssen abgesehen, in einem durchgezogen werden kann.

Bevorzugterweise besteht der bidirektionale Lichtwellenleiter aus einem Multimodewellenleiter mit Stufenprofil zur paketweisen Gleichwellenübertragung von Lichtsignalen mit einer Wellenlänge von vorzugsweise 820 nm.

Untersuchungen haben gezeigt, daß diese Art der Lichtwellenübertragung bis zu Längen von 3 km gegenüber anderen Arten, z.B. konventionelles 2-Faser System, Wellenlängen-Multiplex- oder Transceiver-System, am wirtschaftlichsten ist. Bei einer Wellenlänge von etwa 820 nm besitzen die Empfangs-Dioden die höchste Quantenausbeute und der Lichtwellenleiter eine relativ kleine Dämpfung.

Eine einfache und flexible Ausführung der Steuer- und Überwachungs-Einheit wird erreicht, wenn diese modular aus Einschubeinheiten aufgebaut ist, wobei für jedes Schaltfeld nur eine Einschubeinheit vorhanden ist, die an ihrer Frontblende ein Blindschaltbild mit LED-Anzeige für die Stellungsrückmeldung der Schaltgeräte besitzt.

Der jeweilige Schaltzustand eines Schaltfeldes kann damit auch an der Steuer- und Überwachungs-Einheit jederzeit abgelesen werden, wodurch die Überwachungsfunktion der Schaltstation optimal gegeben und überprüfbar ist.

Universell einsetzbar und leicht an besondere Anforderungen anpaßbar kann die Steuer- und Überwachungs-Einheit ausgeführt sein, wenn jeder Speicher-Einheit zusätzliche Einschubeinheiten mit Tastaturanschluß zur freien Programmierung zugeordnet sind. Änderungen im Steuerbefehlablauf oder im Ein-und Ausgabe-Programm sind dadurch einfach durchzuführen.

Die Ausfalls- und Betriebssicherheit der Einrichtung kann gesteigert werden, wenn das Mikroprozessor-System vorzugsweise aus zwei an einen Komparator angeschlossene Mikroprozessoren besteht.

Der Komparator vergleicht die digitalen Signale an den Ein- und Ausgängen der beiden Mikroprozessoren und leitet bei Divergenz automatischen Neustart bzw. Stoppfunktion und Fehlermeldung über die Steuer- und Überwachungs-Einheit ein, wodurch die Übertragungssicherheit der Steuerbefehle erhöht werden kann.

Bevorzugterweise erfolgt dabei die Steuerung der Schaltfelder zweipolig, wobei jeder Steuerbefehl zum Schalten eines Schaltgerätes seriell in zweifachen Datenblöcken übertragen wird.

Um die elektronischen Einheiten in den Schaltfeldern zusätzlich gegen äußere Einflüsse, vor allem elektromagnetischer Art, zu schützen, kann jedes Mikroprozessor-System zusammen mit ihrer Speiseeinheit und dem optischen Viertorkoppler mit integrierten Empfangs- und Sende-Dioden in einem Metallgehäuse mit zwei Lichtleiteranschlüssen und elektrischen Anschlüssen für Steuer- und Meldeleitungen untergebracht sein.

Um elektromagnetische Beeinflussungen aus den Hochspannungsgeräten sowie Störungen durch Überspannungen möglichst ausschließen zu können und die Übertragungssicherheit von Steuerbefehlen zu optimieren, sind damit nicht nur das Mikroprozessor-System, die zweipolige Steuerung der Schaltfelder, Speiseeinheit mit Überspannungsschutzschaltung und Filterkreise vorgesehen, sondern auch eine äußere elektromagnetisch dichte Abschirmung durch das Metallgehäuse, welches lediglich zwei Lichtleiteranschlüsse und als Mehrfachstecker ausgeführte elektrische Anschlüsse für Steuer- und Meldeleitungen aufweist.

In einer Weiterbildung kann von einem Schaltgeräteantriebskasten oder Klemmkasten in jedem Schaltfeld ein zweiter bidirektionaler Lichtwellenleiter zur Steuer- und Überwachungs-Einheit führen.

Damit kann einerseits eine Trennung der Steuer- und Meldefunktionen von Meß- und bestimmten Schutzfunktionen erreicht, anderseits zusätzliche Funktionen, wie Überspannungsableiterüberwachung, Funktions- und Revisionsintervallkontrolle der Schaltgeräte, Zählung, Transformatorregelung etc., integriert werden.

Im folgenden werden an Hand der beiliegenden Zeichnung Ausführungsbeispiele des Erfindungsgegenstandes näher erläutert. Es zeigen: Fig. I das einpolige Schaltbild einer fünffeldrigen Hochspannungsschaltanlage mit schematisch dargestellten Lichtwellenleiterverbindungen, Fig. 2 das Blockschaltbild der erfindungsgemäßen Einrichtung, Fig. 3 den Aufriß einer modular aus Einschubeinheiten aufgebauten Steuer- und Überwachungs-Einheit in der Schaltstation und Fig. 4 das Blockschaltbild eines Doppel-Mikroprozessor-Systems mit optischem Viertorkoppler in einem Metallgehäuse.

Aus dem in Fig. I dargestellten einpoligen Schaltbild einer Hochspannungsanlage für Freiluft sind zwei Sammelschienen I9, 2O erkennbar, an welche je über zwei Trennschalter fünf strichpunktiert gezeichnete Schaltfelder 2I...25 angeschlossen sind. Im Schaltfeld 23 können die Sammelschienen I9, 2O über einen Leistungsschalter gekuppelt werden. Die Schaltfelder 22, 24 sind über Leistungsschalter je an Transformatoren 28, 29 angeschlossen und speisen die Sammelschienen I9, 2O. Zwei Schaltfelder 26, 27 führen über Leistungsschalter, Abgangstrennschalter und Leitungen 26, 27 zu Verbrauchern. Zur besseren Übersichtlichkeit des Schaltbildes sind in Fig. I Erdungsschalter, welche zur Personensicherheit bei Revisionen von Schaltfeldern vorgesehen sind, Meßwandler und Über-spannungsableiter nicht dargestellt. Doppelte Sam-melschienen I9, 2O wählt man bekanntlich aus Gründen der Versorgungssicherheit bzw. Verfüg-barkeit elektrischer Energie. Sämtliche Leistungs-schalter und Trennschalter sind über in Schaltgerä-teantriebskästen I...I7 untergebrachte Antriebe, z.B. Motor- oder Federkraftspeicher-Antriebe, Vor-Ort, von der Schaltstation oder einer Fernwirkanlage betätigbar. Zur Vermeidung von Fehlschaltungen und zum Schutz der Hochspannungsschaltanlage bei Störungen, z.B. Kurzschlüsse durch Blitzein-schläge, und Überlastungen sind Schutzmaßnah-men, beispielsweise Schaltfehlerschutz, Kurzunter-brechung, Differentialschutz u.a., vorgesehen.

Nicht nur diese Steuerfunktion, sondern auch sämtliche Melde-, Meß- und Schutzfunktionen werden in der Schaltstation von einer Steuer- und Überwachungsd-Einheit 3O abgewickelt. Die Datenübertragung von der Schaltstation zu den Schaltge-räteantriebskästen I...I7 und umgekehrt, gegebe-nenfalls von Klemmkästen an Meßwandlerrahmen, erfolgt durch bidirektionale Lichtwellenleiter 3I...35, welche in Fig. I strichliert angedeutet sind. Inner-halb eines jeden Schaltfeldes 2I...25 sind die Schaltgeräteantriebskästen über den Lichtwellenleiter miteinander verbunden, im Schaltfeld 2I bei-spielsweise die Schaltgeräteantriebskästen I, 2, 3, 4. Vom Schaltgeräteantriebskasten 4 führt dann der Lichtwellenleiter 3I zur Steuer- und Überwachungs-Einheit 3O.

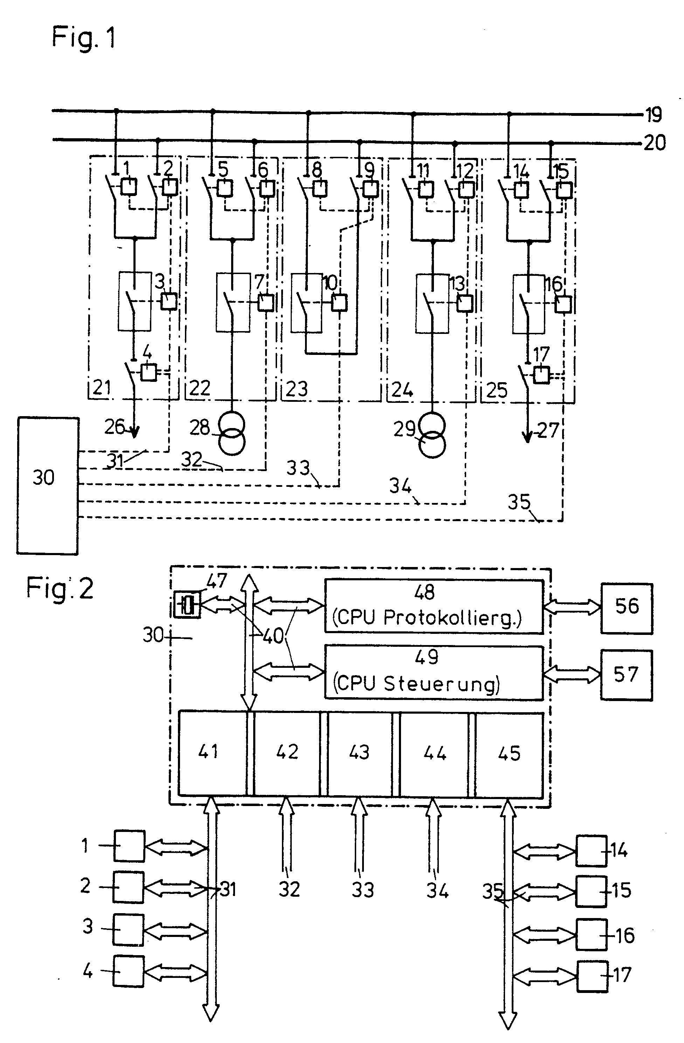

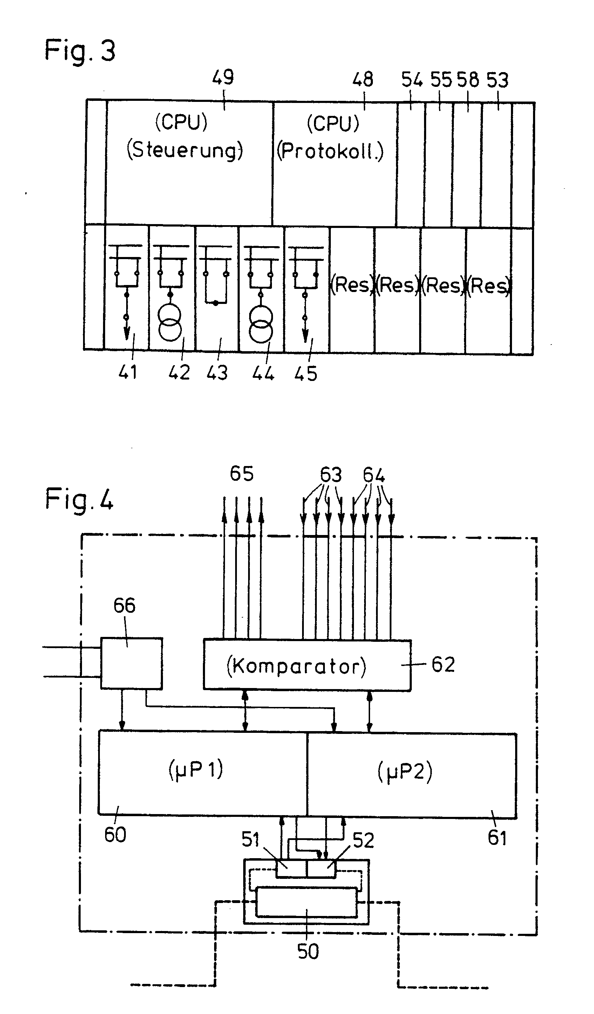

In Fig. 2 ist das Blockschaltbild der Steuer- und Überwachungs-Einheit 3O gezeichnet, welche aus fünf Mikroprozessoren 4I...45, zwei Speicher-Einheiten 48, 49 und einer quarzgesteuerten Zeit-Einheit 47 besteht, die durch Busleitungen 4O miteinander verbunden sind. Die Speicher-Einheiten 48, 49 dienen der Protokollierung sowie Steuerung und stellen die Zentraleinheiten (CPU) dar, welche den Datenfluß regeln und speichern. Als prozessorgeführte Ein- und Ausgabeeinheiten sind die Mikro-prozessoren 4I...45 über optische Koppler mit integrierten Empfangs- und Sende-Dioden je an einen bidirektionalen Lichtwellenleiter 3I...35 angeschlos-sen, der zum Schaltgeräteantriebskasten des zuge-ordneten Schaltfeldes 2I...25 führt. In Fig. 2 sind die Schaltgeräteantriebskästen I...4; I4...I7 und die bidirektionalen Lichtwellenleiterverbindungen 3I; 35 durch Kästchen bzw. Doppelpfeile schematisch dargestellt, für die Schaltfelder 22, 23, 24 nur angedeutet. Über Draht- oder Lichtwellenleiter an die Speicher-Einheiten 48 bzw. 49 angeschlossen sind eine Gefahrenmeldezentrale 56 bzw. Fernwirkanlage 57. Zwischen den Speicher-Einheiten 48, 49 und der Gefahrenmeldezentrale 56 bzw. Fernwirkanlage 57 kann dadurch ein Datenaustausch seriell oder parallel stattfinden, wogegen zwischen jedem Mikroprozessor 4I...45 und zugehörigen Schaltge-räteantriebskästen I...I7 eine serielle Datenübertra-gung in beiden Richtungen erfolgt. In der Steuer- und Überwachungs-Einheit 3O werden sämtliche Steuerbefehle von der Fernwirkanlage, Schaltwarte der Schaltstation oder den Schaltgeräteantriebskä-sten I...I7 nach gespeicherten Programmen, z.B. Kontrolle     Schaltfehlerschutz,     Schaltautomatik, Schaltverriegelung, Synchronisierung, ausgewertet und umgesetzt. Gleichermaßen werden die Rückmeldungen verarbeitet, dann angezeigt und protokolliert.

Bevorzugterweise     ist     die     Steuer-     und Überwachungs-Einheit 3O modular durch Einschubeinheiten in einem Gestellrahmen aufgebaut. Der Gestellrahmen ist in Fig. 2 strichpunktiert dargestellt.

Fig. 3 zeigt die Vorderansicht einer Ausführungsform der Steuer- und Überwachungs-Einheit 3O mit modularem Aufbau. Die den Schaltfeldern 2I...25 zugeordneten Mikroprozessoren 4I...45 sind als Einschubeinheiten ausgebildet, auf deren Frontblende das Blindschaltbild des jeweiligen Schaltfel-des 2I...25 abgebildet ist. In den Blindschaltbildern erfolgt die Stellungsanzeige für die Schaltgeräte durch LED-Dioden, wobei Dauerlicht EIN-Stellung, Blinklicht Schaltvorgang oder Störung und kein Licht AUS-Stellung bedeuten kann. Die Speicher-Einheiten 48, 49 sind ebenfalls als Einschubeinheiten aufgebaut und besitzen zugeordnete Einschubeinheiten 53, 54, 55, 58 mit Hilfe welcher die Programmierung und Ein- oder Ausgabe allgemein oder für bestimmte Steuerbefehle oder Meldungen rasch veränderbar ist. Es können auch Einschubeinheiten für den Versorgungsteil, Meßanzeigen, Zählung oder Graphiken vorgesehen sein. Reserveplätze ermöglichen den Anschluß weiterer Schaltfelder.

Ein Ausführungsbeispiel eines Mikroprozessor-Systems für die Schaltgeräteantriebskästen I...I7 gemäß Fig. I und 2 ist in Fig. 4 im Blockschaltbild gezeichnet. Sämtliche Bauteile sind in einem Metallgehäuse angeordnet, welches strichpunktiert dargestellt ist und zwei Lichtwellenleiteranschlüsse und als Mehrfachstecker ausgeführte elektrische Anschlüsse 63, 64, 65 besitzt. Im Metallgehäuse befinden sich der optische Viertorkoppler 5O mit integrierten Empfangs- und Sende- Dioden 5I, 52, zwei Mikroprozessoren 6O, 6I, ein Komparator 62 und eine Speiseeinheit 66, welche die Gleichspannungsumsetzung vornimmt und eine Überspannungsschutzschaltung enthält. Mikroprozessoren 6O, 6I und Komparator 62 sind über Busleitungen miteinander verbunden. Die Speiseeinheit 66 und die Empfangs- und Sende-Dioden 5I, 52, die aus LED- bzw. PIN-Dioden bestehen, sind an die Mikroprozessoren 6O, 6I angeschlossen. Die Anschlüsse 65 sind Ausgänge für den Steuerbefehl zu den Schaltspulen der Antriebe, die Anschlüsse 63 bzw. 64 Eingänge aus der Vor-Ort-Steuerung bzw. Rückmeldung, die Filterkreise gegen Störspannungen enthalten. Der Komparator 62 vergleicht alle digitalen Signale an den Ein-und Ausgängen der Mikroprozessoren 6O, 6I und leitet bei Divergenz automatischen Neustart bzw. Stoppfunktion und Fehlermeldung über die bidirektionale Lichtwellenleitung 3I ein. Eine Fehlsteuerung der Schaltgeräte ist dadurch praktisch ausgeschlossen. Umsomehr, wenn die Steuerung der Schaltfelder 2I...25 zweipolig erfolgt, mindestend jeder Steuerbefehl zum Schalten eines Schaltgerätes seriell in zweifachen Datenblöcken übertragen wird und die elektronischen Komponenten in den Schaltgeräteantriebskästen durch ein Metallgehäuse elektromagnetisch dicht abgeschirmt sind. Die Speiseeinheit 66 nimmt die Umsetzung der in den Schaltgeräteantriebskästen I...I7 vorhandenen Steuergleichspannung für die Antriebsmotoren und Auslösespulen vor, so daß kein eigener Speisekreis für die Mikroprozessor-Systeme 6O...65 und Kommunikation mit der Steuer- und Überwachungs-Einheit 3O erforderlich ist.

Die Anwendung der Einrichtung zur Steuerung und Überwachung ist nicht auf Hochspannungsschaltanlagen beschränkt, sondern auch bei metallgekapselten Mittelspannungsanlagen und druckgasisolierten Schaltanlagen auf wirtschaftliche Art einsetzbar. Die Mikroprozessor-Systeme 5O, 5I, 52 befinden sich dann im Steuerteil der jeweiligen Schaltzelle bzw. in den Antriebskästen oder Steuerteilen der druckgasisolierten Schaltanlage.

**Patentansprüche**

1. Einrichtung zur Steuerung und Überwachung einer elektrischen Energieverteilungsanlage, insbesondere einer Hochspannungsschaltanlage in Freiluft, mit mehreren, von einer Schaltstation aus gesteuerten und überwachten Schaltfeldern und Übertragung von in Mikroprozessoren mit Speicher-Einheiten verarbeiteten digitalen Signalen zwischen Schaltstation und den Schaltfeldern über bidirektionale Lichtwellenleiter, dadurch gekennzeichnet, daß sämtliche Schaltgeräteantriebskästen je eines Schaltfeldes (2I...25) durch wenigstens einen bidirektionalen Lichtwellenleiter (3I...35) miteinander verbunden sind, der an eine in der Schaltstation befindliche Steuer- und Überwachungs-Einheit (3O) mit Zeit- Einheit (47) und wenigstens einem Mikroprozessor (4I...45) je Schaltfeld (2I...25) angeschlossen ist, wobei die Umsetzung der digitalen Signale durch optische Viertorkoppler (5O) mit integrierten Empfangs- und Sende-Dioden (5I, 52) in den Schaltgeräteantriebskästen (I...I7) erfolgt, und die elektrischen Signale zur Steuerung des jeweiligen Schaltfeldes (2I...25) und Rückmeldung an die Steuer- und Überwachungs-Einheit (3O) in einem vereinheitlichten, in den Schaltgeräteantriebskästen (I...I7) vorhandenen Mikroprozessor-System (6O...66) ausgewertet werden.

2. Einrichtung nach Anspruch I, dadurch gekennzeichnet, daß der bidirektionale Lichtwellenleiter (3I...35) aus einem Multimodewellenleiter mit Stufenprofil zur paketweisen Gleichwellenlängenübertragung von Lichtsignalen mit einer Wellenlänge von vorzugsweise 82O nm besteht.

3. Einrichtung nach Anspruch I oder 2 mit einer modular aus Einschubeinheiten aufgebauten Steuer- und Überwachungs-Einheit, dadurch gekennzeichnet, daß für jedes Schaltfeld (2I...25) nur eine Einschubeinheit vorhanden ist, die an ihrer Frontblende ein Blindschaltbild mit LED-Anzeige für die Stellungsrückmeldung der Schaltgeräte besitzt.

4. Einrichtung nach einem der Ansprüche I bis 3, dadurch gekennzeichnet, daß das Mikroprozessor-System (6O...66) vorzugsweise aus zwei an einen Komparator (62) angeschlossenen Mikroprozessoren (6O, 6I) besteht.

5. Einrichtung nach einem der Ansprüche I bis 4, dadurch gekennzeichnet, daß die Steuerung der Schaltfelder (2I...25) zweipolig erfolgt und mindestens jeder Steuerbefehl zum Schalten eines Schaltgerätes seriell in zweifachen Datenblöcken übertragen wird.

6. Einrichtung nach einem der Ansprüche l bis 5, dadurch gekennzeichnet, daß jedes Mikroprozessor-System (6O...65) zusammen mit ihrer Speiseeinheit (66) und dem optischen Viertorkoppler (5O) mit integrierten Empfangs- und Sende-Dioden (5l, 52) in einem Metallgehäuse mit zwei Lichtleiteranschlüssen und elektrischen Anschlüssen (63, 64, 65) für Steuer-und Meldeleitungen untergebracht ist.

7. Einrichtung nach einem der Ansprüche l bis 6, dadurch gekennzeichnet, daß von einem Schaltgeräteantriebskasten (l...l7) oder Klemmkasten in jedem Schaltfeld (2l...25) ein zweiter bidirektionaler Lichtwellenleiter zur Steuer- und Überwachungs-Einheit (3O) in der Schaltstation führt.

## Claims

1. Device for controlling and monitoring an electrical power distribution installation, in particular an outdoor high-voltage switching station, having a plurality of switchbays that are controlled and monitored from a switching station, and transmission of digital signals processed in microprocessors having memory units between switching station and the switchbays via bidirectional optical fibres, characterised in that all the switchgear drive boxes of each individual switchbay (21...25) are mutually connected by at least one bidirectional optical fibre (31...35) which is connected to a control and monitoring unit (30) which is located in the switching station and has a time unit (47) and at least one microprocessor (41...45) per switchbay (21...25), the conversion of the digital signals being performed by optical four-port couplers (50) with integrated receiving and transmitting diodes (51, 52) in the switchgear drive boxes (1...17) and the electrical signals for controlling the respective switchbay (21...25) and feedback to the control and monitoring unit (30) being evaluated in a standardised microprocessor system (60...66) present in the switchgear drive boxes (1...17).

2. Device according to Claim 1, characterised in that the bidirectional optical fibre (31...35) consists of a multimode fibre with a step index profile for packet-oriented equal wavelength transmission of light signals with a wavelength of preferably 820 nm.

3. Device according to Claim 1 or 2 having a control and monitoring unit constructed in a modular fashion from plug-in units, characterised in that for each switchbay (21...25) only one plug-in unit is present, which has on its frontplate a mimic diagram with LED display for positional feedback of the switching devices.

4. Device according to one of Claims 1 to 3, characterised in that the microprocessor system (60...66) preferably consists of two microprocessors (60, 61) connected to a comparator (62).

5. Device according to one of Claims 1 to 4, characterised in that the control of the switchbays (21...25) is performed in a bipolar fashion and at least each control command for switching a switching device is transmitted serially in dual data blocks.

6. Device according to one of Claims 1 to 5, characterised in that each microprocessor system (60...65), is accommodated, together with its feed unit (66) and the optical four-port coupler (50 with integrated receiving and transmitting diodes (51, 52), in a metal casing having two light guide terminals and electrical terminals (63, 64, 65) for control and signal lines.

7. Device according to one of Claims 1 to 6, characterised in that a second bidirectional optical fibre leads from one switchgear drive box (1...17) or terminal box in each switchbay (21...25) to the control and monitoring unit (30) in the switching station.

## Revendications

1. Dispositif pour la commande et la surveillance d'une installation de distribution d'énergie électrique, en particulier d'une installation aérienne à haute tension, comprenant plusieurs champs de commutation commandés et surveillés par une station de commutation et incorporant la transmission de signaux numériques, qui sont traités dans des microprocesseurs avec des unités mémoire entre ladite station de commutation et lesdits champs de commutation en empruntant des guides d'ondes lumineuses bidirectionnels, caractérisé par le fait que toutes les boîtes motrices des appareils de commutation de chaque champ de commutation (21 à 25) sont reliées entre elles par au moins un guide d'ondes lumineuses bidirectionnel (31 à 35), ce guide étant relié à une unité de commande et de surveillance (30) à unité d'horloge (47) et à au moins un microprocesseur (41 à 45) par champ de commutation (21 à 25), la conversion des signaux numériques étant obtenue par des coupleurs optiques à quatre portes (50) associés à des diodes de réception et d'émission (51, 52) et montées dans les boîtes motrices (1 à 17) des appareils de commutation, et les signaux électriques pour la commande de chaque champ de commutation respectif (21 à 25) et pour la retransmission vers l'unité de commande et de surveillance (30) étant traités dans un système uniformisé de microprocesseurs (60 à 66) dont sont munies les boîtes motrices (1 à 17) des appareils de commutation.

2. Dispositif selon la revendication 1, caractérisé en ce que le guide de lumière bidirectionnel (31 à 35) est du type multimode avec profil en étages pour la transmission de signaux de lumière d'une longueur d'onde de préférence de 820 nm du type transmission à onde unique et en paquet.

3. Dispositif selon la revendication 1 ou 2, comportant une unité de commande et de surveillance qui est constituée de façon modulaire d'unités emboîtables, caractérisé en ce qu'on prévoit une unité emboîtable par champ de commutation (21 à 25), cette unité présentant sur son bord frontal un circuit synthétique avec affichage du type LED pour la signalisation du positionnement des appareils de commutation.

4. Dispositif selon l'une des revendications 1 à 3, caractérisé en ce que le système de microprocesseurs (60 à 66) est constitué de préférence de deux microprocesseurs (60, 61) reliés à un comparateur.

5. Dispositif selon l'une des revendications 1 à 4, caractérisé en ce que la commande des champs de commutation (21 à 25) est effectuée par deux pôles, au moins chaque ordre de commande pour commuter un appareil de commutation étant alors transmis en série dans des blocs de données doubles.

6. Dispositif selon l'une des revendications 1 à 5, caractérisé en ce que chaque système à microprocesseurs (60 à 65) et son alimentation (66) ainsi que le coupleur optique à quatre portes (50) associé aux diodes de réception et d'émission (51, 52) sont enfermés dans un boîtier métallique ayant deux bornes de guide de lumière et des bornes électroniques (63, 64, 65) pour les lignes de commande et de signalisation.

7. Dispositif selon l'une des revendications 1 à 6, caractérisé en ce qu'un second guide de lumière bidirectionnel relie une boîte motrice (1 à 17) des appareils de commutation ou une boîte de borne dans chaque champ de commutation (21 à 25) et l'unité de commande et de surveillance (30) dans la station de commutation.

Fig. 1

19
20

1  2    5  6    8  9    11 12    14 15

3    7    10    13    16

4                              17

21    22    23    24    25

26    28    33    29    27

30    31    32         34         35

Fig. 2

47
30    40

| 48 (CPU Protokollierg.) | 56 |
| 49 (CPU Steuerung) | 57 |

| 41 | 42 | 43 | 44 | 45 |

1                              14
2    31    32    33    34    35    15
3                              16
4                              17

## Fig. 3

| | (CPU) (Steuerung) 49 | (CPU) (Protokoll.) 48 | 54 | 55 | 58 | 53 |
|---|---|---|---|---|---|---|

41 42 43 44 45

(Res)(Res)(Res)(Res)

## Fig. 4

65        63   64

66

(Komparator) — 62

(µP 1)        (µP2)

60        51      52        61

50